# EUROPÄISCHE PATENTSCHRIFT

(11) **EP 3 809 046 B1**
(45) Veröffentlichungstag und Bekanntmachung des Hinweises auf die Patenterteilung: **03.08.2022**
(21) Anmeldenummer: 20196857.5
(22) Anmeldetag: 18.09.2020
(51) Int. Cl.: F24C 7/08, G06F 3/01, A47J 43/00, H05B 6/12, A47J 36/32, G06F 3/0354

(54) **BEDIENSYSTEM FÜR EIN ELEKTROHAUSHALTSGERÄT UND BEDIENVERFAHREN ZUR BEDIENUNG EINES ELEKTROHAUSHALTSGERÄTS**
CONTROL SYSTEM FOR AN ELECTRIC DOMESTIC APPLIANCE AND METHOD FOR OPERATING AN ELECTRIC DOMESTIC APPLIANCE
SYSTÈME DE COMMANDE D'UN APPAREIL ÉLECTROMÉNAGER ET PROCÉDÉ DE COMMANDE PERMETTANT DE COMMANDER UN APPAREIL ÉLECTROMÉNAGER

(30) Priorität: 16.10.2019 DE 102019215953
(43) Veröffentlichungstag der Anmeldung: 21.04.2021
(73) Patentinhaber: E.G.O. Elektro-Gerätebau GmbH, 75038 Oberderdingen (DE)
(72) Erfinder: Eitel, Sandra, 71665 Vaihingen/Enz-Riet (DE); Engelhardt, Patrick, 75038 Oberderdingen (DE); Lauser, Achim, 71299 Wimsheim (DE)
(74) Vertreter: Patentanwälte Ruff, Wilhelm, Beier, Dauster & Partner mbB

(56) Entgegenhaltungen:
- WO-A1-03/029959
- DE-A1-102011 080 246
- JP-A- 2010 003 303
- US-A- 5 617 312
- US-B1- 6 538 645

## Beschreibung

### Anwendungsgebiet und Stand der Technik

Die Erfindung betrifft ein Bediensystem für ein Elektrohaushaltsgerät sowie ein Bedienverfahren zur Bedienung eines Elektrohaushaltsgeräts, wobei ein vorgenanntes Bediensystem genutzt wird.

Bei Elektrohaushaltsgeräten wie beispielsweise Kochfeldern ist bekanntermaßen am Kochfeld selbst, insbesondere im vorderen Bereich einer Kochfeldplatte, eine Bedieneinrichtung vorgesehen. Hier sind häufig drehbare Bedienknebel oder Berührungsschalter vorgesehen, mit denen Bedienfunktionen oder Bedienbefehle für das Kochfeld eingegeben werden können.

Eine weitere Möglichkeit, ein Elektrohaushaltsgerät zu bedienen, ist aus der DE 103 61 341 A1 bekannt. Dort werden Handbewegungen einer Bedienperson im freien Raum berührungsfrei erfasst. Durch bestimmte Handbewegungen oder Fingerbewegungen können Bedienbefehle erzeugt werden. Dazu kann an der Hand ein Sender getragen werden, dessen Position im freien Raum durch Interpolation mit mehreren Empfängern erfasst wird. Alternativ kann mindestens eine Videokamera vorgesehen sein, um eine Position und/oder Stellung der Hand der Bedienperson zu ermitteln, um darauf aufbauend Bedienbefehle zu erzeugen. Beide Möglichkeiten sind auswertungstechnisch jedoch sehr aufwändig und fehleranfällig. Des Weiteren ist es nicht immer einfach zu definieren, wann eine Fingerbewegung oder Handbewegung einen Bedienbefehl bewirken soll und wann diese bei einem Kochvorgang durchgeführt werden ohne den Wunsch, einen Bedienbefehl zu bewirken.

Aus der US 6,538,645 B1 ist ein Bediensystem für einen Computer bekannt mit einer Kamera und mit einem Stift, der in der Hand gehalten werden kann. An einer Spitze des Stifts ist eine LED angeordnet, deren Leuchten von der Kamera erkannt werden kann. Eine Bewegung des Stifts bzw. dessen Spitze auf eine Erfassungsfläche wie beispielsweise einem Schreibtisch kann dann an einem Bildschirm des Computers wiedergegeben werden und einen Cursor steuern.

Aus der US 5,617,312 A ist ein weiteres Bediensystem für einen Computer bekannt, bei dem ein Cursor auf einem Bildschirm des Computers entweder mit einer Art Maus bewegt werden kann. Alternativ kann eine Kamera Bewegungen der Hand oder eines in der Hand gehaltenen Stifts erkennen. Bewegungen der Hand oder des Stifts werden mit dem Cursor auf dem Computerbildschirm entsprechend wiedergegeben.

Aus der JP 2010-003303 A ist eine weitere Möglichkeit zur Bedienung eines Computers bekannt, wobei eine Kamera ein Gesicht und somit auch Gesten einer Bedienperson aufnimmt und auswertet.

Aus der DE 10 2011 080 246 A1 ist ein Küchenutensil bekannt, das beispielsweise als Kochlöffel ausgebildet sein kann. In dem Küchenutensil ist eine Einrichtung zur Bestimmung seiner Position vorgesehen, wobei dazu am Ende des Küchenutensils IR-Sensoren angeordnet sind. Unter einer Kochfeldplatte sind mehrere IR-Sender angeordnet, die jeweils eine Kochstelle umgeben. Wird auf eine der Kochstellen ein Topf aufgestellt, in dem das Küchenutensil im Rahmen seiner Verwendung als Kochlöffel platziert ist, so kann mittels der Positionsbestimmung des Küchenutensils die Position des Topfes bestimmt werden.

Aus der WO 03/029959 A1 ist ein Roboter für ein automatisches Kochverfahren bekannt, welcher mittels Roboterarmen exakt die Bewegungen eines Kochs mit seinen Händen und Armen nachbilden. Dafür werden zuvor mit mehreren Kameras die Handbewegungen des Kochs beim Zubereiten einer bestimmten Speise aufgenommen und so verarbeitet und abgespeichert, dass die Roboterarme genau dieselben Bewegungen ausführen. So kann später mittels des Roboters automatisiert gekocht werden bzw. eine Speise zubereitet werden.

### Aufgabe und Lösung

Der Erfindung liegt die Aufgabe zugrunde, ein eingangs genanntes Bediensystem sowie ein eingangs genanntes Bedienverfahren zu schaffen, mit denen Probleme des Standes der Technik vermieden werden können und es insbesondere möglich ist, mit der Hand Bedienbefehle zu bewirken bzw. zu erzeugen, die sicher erkennbar sind und die einfach und praxistauglich durchgeführt werden können.

Gelöst wird diese Aufgabe durch ein Bediensystem mit den Merkmalen des Anspruchs 1 sowie durch ein Bedienverfahren mit den Merkmalen des Anspruchs 12. Vorteilhafte Ausgestaltungen der Erfindung sind in den weiteren Ansprüchen enthalten und werden im Folgenden näher erläutert. Dabei werden manche der Merkmale nur für das Bediensystem oder nur für das Bedienverfahren erläutert. Sie sollen jedoch unabhängig davon sowohl für das Bediensystem als auch für das Bedienverfahren selbständig und unabhängig voneinander gelten können. Der Wortlaut der Ansprüche wird durch ausdrückliche Bezugnahme zum Inhalt der Beschreibung gemacht.

Das Bediensystem für das Elektrohaushaltsgerät weist eine Erfassungsoberfläche bzw. eine Erfassungsfläche auf, an oder über der mit einer Hand oder mit einer Eingabevorrichtung Bedienbefehle erzeugt werden können. Diese im Folgenden nur noch Erfassungsfläche genannte Erfassungsoberfläche ist vorzugsweise horizontal ausgerichtet bzw. verläuft horizontal. Auf diese Erfassungsfläche ist eine Kamera des Bediensystems ausgerichtet, um sie zu überwachen bzw. um eine Bedienung erkennen zu können, die einen Bedienbefehl erzeugen soll bzw. bewirken soll. Des Weiteren weist das Bediensystem eine eigenständig und frei bewegbare Eingabevorrichtung auf. Diese ist vorteilhaft so ausgebildet, dass sie in der Hand geführt bzw. gehalten werden kann und frei bewegt werden kann. Vorteilhaft ist die Eingabevorrichtung drahtlos ausgebildet bzw. ohne feste Verbindung zu dem Bediensystem oder dem Elektrohaushaltsgerät. So kann es besonders leicht und gut verwendet werden und problemlos und einfach verstaut werden sowie zur Benutzung hervorgeholt werden. Das genannte Elektrohaushaltsgerät kann ein beliebiges Gerät sein, vorteilhaft ist es ausgewählt aus der Gruppe Kochfeld, Backofen, Abzugshaube, Waschmaschine, Spülmaschine oder Kühlschrank.

Erfindungsgemäß weist die Eingabevorrichtung ein Leuchtmittel auf, dessen Leuchten bzw. dessen Leuchterscheinung bei einem Austritt aus der Eingabevorrichtung von der Kamera erkennbar ist. Die Kamera kann also das Leuchtmittel bzw. dessen Leuchten erkennen, vorteilhaft ein Leuchten möglichst an der Eingabevorrichtung selbst und nicht als Leuchtprojektion auf eine beliebige Fläche, beispielsweise auf die Erfassungsfläche. Das Bediensystem weist eine Steuerung auf für die Kamera, die mit der Kamera verbunden ist. Die Steuerung ist dazu ausgebildet, eine von der Kamera erkannte Leuchterscheinung des Leuchtmittels zu erkennen und räumlich zuzuordnen. Eine solche räumliche Zuordnung kann in zweidimensionaler Hinsicht erfolgen, also dass der Ort der Leuchterscheinung nur in einer zweidimensionalen Fläche bestimmt wird, vorteilhaft an oder auf der Erfassungsfläche. So muss der Abstand der Leuchterscheinung zu der Kamera nicht unbedingt erkannt werden können. Dies kann in einer Ausgestaltung der Erfindung aber auch vorgesehen sein, um die Möglichkeit zur Erzeugung von Bedienbefehlen zu erweitern und um eine Erkennung möglicherweise zu verbessern. Somit kann dreidimensionaler Eindruck bewirkt werden. So kann beispielsweise ein von der Kamera überwachtes oder aufgenommenes Feld bzw. Bedienfeld überwacht werden und die Leuchterscheinung innerhalb dieses Felds erkannt und zugeordnet werden.

Schließlich weist die Eingabevorrichtung mindestens ein Schaltmittel auf, dessen Aktivierung ein Schalten des Leuchtmittels bewirkt. Das Schaltmittel kann also das Leuchtmittel einschalten oder ausschalten bei Aktivieren bzw. Betätigen. Vorteilhaft wird ein Einschalten des Leuchtmittels bewirkt, was dann als expliziter Bedienbefehl gewertet werden kann im Zusammenhang mit einer räumlichen Zuordnung der Leuchterscheinung. So muss das Leuchtmittel nur relativ kurz eingeschaltet werden und kann dann wieder nach kurzer Zeit eben ausgeschaltet werden, was für eine Klarheit bei der Erzeugung des Bedienbefehls sorgt sowie einfach Energie spart. Das Leuchten kann auch nur als eine Art Impuls erfolgen, vorteilhaft dauert es, wenn die Dauer konstruktiv vorgegeben werden kann wie bei einem Impulsschalter, zwischen 0,1 sec und 2 sec.

Erfindungsgemäß kann also durch das Aktivieren des Schaltmittels von einer Bedienperson gezielt ein Bedienbefehl erzeugt oder bewirkt werden, insbesondere räumlich und zeitlich gezielt, was von der Kamera als dadurch ausgelöste Änderung einer Leuchterscheinung an dem Leuchtmittel leicht erkannt werden kann. Aufwändige räumliche Erkennungen, insbesondere dreidimensional, wie beim eingangs genannten Stand der Technik sind dann nicht notwendig. Es sollte also zu sehr viel weniger Fehlbedienungen kommen.

Zur Erzeugung des Bedienbefehls kann die Leuchterscheinung an der Eingabevorrichtung an eine bestimmte Stelle über der Erfassungsfläche gebracht werden, die einem bestimmten Bedienbefehl entspricht. Dann kann durch Aktivieren des Schaltmittels das Leuchtmittel eingeschaltet werden, alternativ ausgeschaltet werden, was dann eben ein einfach durchzuführender und gezielter Bedienbefehl ist. Dies kann die Steuerung nutzen, um abhängig vom Erkennen des Schaltmittels des Leuchtmittels an unterschiedlichen Bereichen an oder oberhalb der Erfassungsfläche einen entsprechenden Bedienbefehl zuzuordnen. Dieser Bedienbefehl kann einem dieser unterschiedlichen Bereiche stets zugeordnet sein oder kontextabhängig zugeordnet sein und beispielsweise wechseln bzw. einem Bereich können unterschiedliche Bedienbefehle erzeugt werden. Diese Bereiche sind eben an oder oberhalb der Erfassungsfläche vorgesehen, bevorzugt als Bedienfelder. Vorteilhaft sind sie in Richtungen parallel zur Erfassungsfläche nebeneinander angeordnet als eine Art Aufteilung der Erfassungsfläche entsprechend einer Benutzeroberfläche im wahrsten Sinne des Wortes. Mehreren dieser Bereiche können bevorzugt unterschiedliche Bedienbefehle für das Elektrohaushaltsgerät zugeordnet sein. Abhängig von der Größe der Erfassungsfläche können möglicherweise auch sämtliche möglichen Bedienbefehle für das Elektrohaushaltsgerät vorgesehen sein und somit ausgewählt werden. Dabei muss die Erfassungsfläche nicht zwingend vollständig aufgeteilt sein in lauter Bereiche bzw. Bedienfelder mit Bedienbefehlen, vielmehr können Teilbereiche ausreichend sein.

In weiterer Ausgestaltung der Erfindung ist es vorteilhaft, wenn an der Erfassungsfläche optische Markierungen vorgesehen sind oder erzeugt werden, mit denen die Erfassungsfläche in unterschiedliche Bereiche unterteilt wird. Alternativ können auf der Erfassungsfläche mindestens eine Bezeichnung und/oder mindestens ein Symbol pro Bereich bzw. Bedienfeld vorgesehen sein. Einerseits ist es hier in einfacher Ausgestaltung der Erfindung möglich, feste und unveränderbare Aufdrucke odgl. auf der Oberseite der Erfassungsfläche vorzusehen. Dies könnten auch Klebeflächen odgl. sein, möglicherweise auch bewegbare und somit auflegbare sowie entfernbare Matten, Platten oder ähnliche flache Gegenstände. Zusätzlich oder vorteilhaft alternativ weist das Bediensystem eine Projektionsvorrichtung auf, die Bezeichnungen oder Symbole auf die Erfassungsfläche projiziert. Dies kann dann vorteilhaft mit variierender bzw. wechselbarer Bedeutung oder variierenden Bezeichnungen bzw. Symbolen erfolgen. Das hat einerseits den Vorteil, dass der Aufwand für feste und unveränderbare Aufdrucke odgl. entfällt. Des Weiteren ist an der Erfassungsfläche durch Beenden einer Projektion nichts sichtbar und stört somit nicht, wenn das Elektrohaushaltsgerät nicht betätigt werden soll bzw. wenn keine Bedienbefehle eingegeben werden sollen. Vor allem aber kann hiermit auch eine kontextabhängige Erzeugung von Bedienbefehlen erfolgen, im Sinne einer Menüführung odgl., so dass abhängig von der Betriebssituation des Elektrohaushaltsgeräts oder abhängig von möglichen Bedienbefehlen eben nur solche Bedienbefehle über Bezeichnungen oder Symbole ermöglicht werden, die überhaupt möglich oder sinnvoll bzw. geboten sind.

In vorteilhafter Ausgestaltung der Erfindung sind das Leuchtmittel und die Kamera bezüglich der Wellenlänge des verwendeten Lichts aufeinander abgestimmt. Das Leuchtmittel und/oder die Kamera können dabei schmalbandig arbeiten, wodurch die Störanfälligkeit gesenkt wird. Sie können einen Wellenlängenbereich von maximal 50 µm oder sogar maximal 100 µm aufweisen, innerhalb dessen das Licht von den Leuchtmitteln erzeugt werden muss, damit es von der Kamera eindeutig erkannt werden kann. Zusätzlich oder alternativ kann IR-Licht verwendet werden, also die Leuchtmittel als IR-Leuchtmittel ausgebildet sein und die Kamera zur Erkennung von solchem IR-Licht. Dann ist eine nochmals stärkere Unabhängigkeit von Störlichtquellen möglich. Des Weiteren können Irritationen bei der Bedienperson vermieden werden durch derartige Lichterscheinungen. Alternativ kann gerade gezielt Licht im sichtbaren Bereich verwendet werden, um durch das Aufleuchten an der Eingabevorrichtung eine optische Rückmeldung an die Bedienperson zu geben, dass ein Bedienbefehl erzeugt wurde oder zumindest die Eingabevorrichtung durch Betätigen des Schaltmittels den notwendigen ersten Schritt hierfür vorgenommen hat. So kann auch gezeigt werden entsprechend einer sonstigen Rückmeldung, wo dies stattgefunden hat, vorteilhaft an der gewünschten Stelle bzw. Bedienfeld.

In einer Möglichkeit der Erfindung kann das Aktivieren des Leuchtmittels mit einer Codierung erfolgen, also als codierte Leuchterscheinung. Eine Codierung ist möglich über eine bestimmte Frequenz und/oder über ein bestimmtes Signalmuster. Eine solche Codierung kann mittels unterschiedlicher Schaltmittel erfolgen bzw. als unterschiedliche Leuchterscheinung durch Betätigung unterschiedlicher Schaltmittel erzeugt werden. Jedem Schaltmittel ist dann eine charakteristische und einzigartige Codierung bzw. Leuchterscheinung zugeordnet. So können unterschiedliche Bedienbefehle erkannt werden oder es kann ein Bedienbefehl, der durch eine räumlich definiert erzeugte Leuchterscheinung ausgelöst wird, abgewandelt werden.

Wichtig ist eben, dass die Leuchterscheinung des Leuchtmittels bevorzugt an der Eingabevorrichtung selbst erkannt wird und nicht an eine andere Stelle projiziert werden muss, ähnlich beispielsweise einem Laserpointer, auf der Erfassungsfläche. So ist eine leichtere Überprüfung einer korrekten bzw. räumlich korrekten Betätigung für die Bedienperson möglich.

In vorteilhafter Weiterbildung der Erfindung weist die Eingabevorrichtung mindestens eine Spitze und/oder mindestens einen abragenden Vorsprung auf. Dies kann zum Deuten für eine eindeutige Zuordnung bzw. eindeutige Erzeugung eines Bedienbefehls mittels der Eingabevorrichtung von Vorteil sein. Bevorzugt ist die Eingabevorrichtung länglich bzw. stiftartig oder nach Art eines Stabs ausgebildet. Eine Länge kann beispielsweise 10 cm bis maximal 50 cm betragen. Ein Durchmesser kann im Bereich weniger Zentimeter liegen, vorteilhaft maximal 2 cm betragen. Eine Eingabevorrichtung ist erfindungsgemäß als Kochutensil ausgebildet, möglicherweise als Kochlöffel, Rührlöffel, Bratgabel, Schneebesen, Rührbesen, Schöpfkelle oder Pfannenwender. Eine vorgenannte Spitze ist dann an einem Ende dieses länglichen Gegenstands als Eingabevorrichtung vorgesehen, vorteilhaft an einem dem Löffelende oder üblichen Funktionsende abgewandten Ende.

Bevorzugt ist bei einer wie vorgenannt ausgebildeten Eingabevorrichtung das genannte Leuchtmittel an der mindestens einen Spitze oder an dem mindestens einen Vorsprung angeordnet, so dass auch dort sein Licht austritt für die vorgenannte Leuchterscheinung, die von der Kamera erkannt werden kann. Alternativ kann Licht von dem Leuchtmittel an beliebiger Stelle innerhalb der Eingabevorrichtung mittels eines Lichtleiters an diese Spitze oder an diesen Vorsprung geleitet werden, wenn dies aus bestimmten Gründen als vorteilhaft angesehen werden sollte. Die Leuchterscheinung an einer solchen Spitze oder an einem Vorsprung vorzusehen weist den großen Vorteil auf, dass damit an der genannten Erfassungsfläche auf einen bestimmten Bereich gezeigt werden kann, möglicherweise sogar zusammen mit direktem Berühren der Erfassungsfläche mit der Spitze oder dem Vorsprung. Somit ist eine genaue Zuordnung möglich. Wenn dann das Schaltmittel aktiviert wird, schaltet es das Leuchtmittel bzw. ändert seine Leuchterscheinung oder erzeugt eine Leuchterscheinung. Diese ist dann gerade durch die Spitze oder den Vorsprung räumlich sehr gut zugeordnet, so dass zum einen eine Bedienperson dies sehr exakt vornehmen kann und zum anderen die Kamera dies sehr exakt bestimmen kann.

In möglicher Ausgestaltung der Erfindung kann das Schaltmittel als Druckschalter ausgebildet sein und so ausgebildet sein, dass es schaltet, wenn die Eingabevorrichtung mit der genannten Spitze oder dem Vorsprung auf eine Fläche gedrückt wird, insbesondere auf die Erfassungsfläche, und zwar mit einer gewissen Kraft. Diese Kraft braucht nicht allzu groß zu sein, sie sollte größer sein als 0,01 N, vorteilhaft größer als 0,1 N oder sogar größer als 1 N. So kann ein leichtes Antippen genügen, möglicherweise muss etwas stärker aufgedrückt werden, je nachdem, was als sinnvoll angesehen wird. Das Schaltmittel ist dann vorteilhaft an der Spitze oder dem Vorsprung ausgebildet, so dass durch leichtes Aufdrücken dieser Spitze oder dieses Vorsprungs auf eine Fläche bzw. auf die Erfassungsfläche das Schaltmittel selbsttätig aktiviert wird und somit die Leuchterscheinung des Leuchtmittels ändert. Das kann dann von der Kamera als gewollter Bedienbefehl erkannt werden. Alternativ kann vorgesehen sein, das Schaltmittel als manuell zu betätigendes Schaltmittel auszubilden, beispielsweise als Druckschalter, Schiebeschalter oder Berührungsschalter. Dann muss zusätzlich zu der Bewegung der Eingabevorrichtung mit einer Spitze oder einem Vorsprung an eine bestimmte Stelle an oder oberhalb der Erfassungsfläche mit dem Finger eine separate Bewegung durchgeführt werden, die aber zugegebenermaßen keinen großen Aufwand darstellt.

In möglicher weiterer Ausgestaltung der Erfindung kann ein Schaltmittel wie vorgenannt an der Spitze oder an einem Vorsprung der Eingabevorrichtung vorgesehen sein, das automatisch bei Aufdrücken aktiviert wird und das Leuchtmittel betätigt. Zusätzlich kann ein weiteres manuell zu betätigendes Schaltmittel vorgesehen sein, das auch ohne ein Aufdrücken das Schalten des Leuchtmittels bewirkt bzw. das Abwandlungen der Bedienbefehle ermöglicht für eine noch größere Varianz.

An der Spitze der Eingabevorrichtung kann ein gleitreibungsvermindertes Material vorgesehen sein, alternativ kann ähnlich einem Kugelschreiber eine drehbar gelagerte Kugel vorgesehen sein. So kann die Eingabevorrichtung mit geringerer Reibung auf der Erfassungsfläche bewegt werden, ebenso werden Beschädigungen vermieden.

In vorteilhafter Ausgestaltung der Erfindung ist die Erfassungsfläche auf einer Küchenarbeitsplatte oder auf einer Kochfeldplatte eines Kochfelds vorgesehen, wobei jeweils die Teile zum Bediensystem gehören. Die Erfassungsfläche ist eben vorteilhaft horizontal ausgerichtet, was eine Anordnung oder eine Projektion auf einer Küchenarbeitsplatte oder einer Kochfeldplatte erleichtert. Alternativ kann die Erfassungsfläche auch schräg oder vertikal sein, beispielsweise an einer Zimmerwand oder an einer Außenwand eines Geräts oder eines Schranks. Dies ermöglicht neue und platzsparende Konzepte zur Bedienung, da möglicherweise gerade im Umfeld eines Kochfelds nicht alle horizontalen Flächen stets und sicher frei sind, um daran die Erfassungsfläche vorzusehen oder durch Projektion odgl. zu erzeugen. Eine Kamera kann bei horizontalen Erfassungsflächen gut darüber angeordnet sein, hierfür eignen sich Anbringungsorte wie eine Abzugsvorrichtung, ein Oberschrank, Wand oder Decke. Möglicherweise kann eine Kamera auch mit einer Projektionsvorrichtung für die Erfassungsfläche oder die vorgenannten Bereiche, Bezeichnungen oder Symbole als eine Baueinheit vorgesehen sein. Dann braucht ihre Zuordnung zueinander nicht aufwändig eingestellt oder justiert werden. Ist eine Erfassungsfläche an einer vertikalen Fläche vorgesehen, wie zuvor erläutert, können Kamera und/oder Projektionsvorrichtung möglichst gegenüberliegend angeordnet sein, vorteilhaft in einem nicht zu stark von 90° abweichenden Winkel, beispielsweise in einem Winkelbereich von 60° bis 90°.

In weiterer Ausgestaltung der Erfindung kann vorgesehen sein, dass die Steuerung für die Kamera mitsamt der Kamera dazu ausgebildet ist, nicht nur an einer Stelle eine Leuchterscheinung bzw. ein geschaltetes Leuchtmittel zu erkennen. Vielmehr kann dies auch an unterschiedlichen Stellen als Bewegungszug erkannt werden, um daraus einen bestimmten Bedienbefehl abzuleiten. Somit sind komplexe Bedienbefehle möglich, alternativ kann sogar eine Handschrift-Bewegung der Eingabevorrichtung bzw. mit der Eingabevorrichtung durch die Kamera und durch die Steuerung erkannt werden. Dadurch sind quasi unbegrenzt viele Bedienbefehle vorstellbar. Eine Bewegung der Eingabevorrichtung kann anhand einer Auswertung von jeweiligen x-y-Koordinaten an der Erfassungsfläche erfolgen, was aber an sich grundsätzlich als Erkennung von Bedienbewegungen aus dem Stand der Technik bekannt ist.

Handschriftliche Notizen, Skizzen odgl. können erkannt und entweder als Bedienbefehl ausgewertet werden oder abgespeichert werden, vorzugsweise in einem Rezeptbuch oder als Notiz, Memos bzw. als Einkaufszettel. So ist eine Realisierung einer Notizunktion oder Rezeptfunktion möglich. Beispielsweise kann eine Bedienperson handschriftliche Notizen und Skizzen in einem virtuellen Notizblock oder Rezeptbuch festhalten. Dies kann möglicherweise durch z.B. Projektion an der Erfassungsfläche angezeigt werde zur Kontrolle oder bei einer späteren Verwendung.

Ein weiterer großer Vorteil der Erfindung ist auch, dass die eigenständig bewegbare Eingabevorrichtung keine Datenübertragung im eigentlichen Sinne durchführen können muss, also keinen Funkstandard oder kein Anschlusskabel haben muss. Ihre Leuchterscheinung ist zwar auch ein Bestandteil einer Information, aus der ein entsprechender Bedienbefehl generiert werden kann. Der wichtigere Bestandteil ist aber der Ort, an dem diese Leuchterscheinung erfolgt. Vor allem eben erfolgt vorteilhaft keine Datenübertragung im klassischen Verständnis von der Eingabevorrichtung aus. Die Berechnung bzw. Auswertung von jeweiligen x-y-Koordinaten an der Erfassungsfläche erfolgt besonders vorteilhaft ausschließlich an der Kamera. Es kann auch ein wichtiger vorteilhafter Sicherheitsaspekt erreicht werden, weil nämlich eine Sichtverbindung zwischen Bedienperson und zu steuerndem Gerät zwangsweise vorliegt wenn die Bedienperson die Eingabevorrichtung an der Erfassungsfläche betätigt bzw. die Leuchterscheinung bewirkt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen- Überschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. Dabei zeigen:
- Fig. 1: eine vereinfachte Darstellung eines erfindungsgemäßen Bediensystems mit Erfassungsfläche, einer stiftartigen Eingabevorrichtung an der Erfassungsfläche und einer Kamera darüber,
- Fig. 2 und 3: Seitenansichten der stiftartigen Eingabevorrichtung in Ausbildung als Kochlöffel,
- Fig. 4: eine vergrößerte Schnittdarstellung durch den freien Endbereich der Eingabevorrichtung mit Spitze und Schalter sowie LED darin,
- Fig. 5: eine Bediendarstellung, bei der die stiftartige Eingabevorrichtung in der Hand einer Bedienperson ist,
- Fig. 6: eine Abwandlung der Darstellung des freien Endes der Eingabevorrichtung ähnlich Fig. 4 mit zwei unterschiedlichen Schaltern,
- Fig. 7: eine Draufsicht von oben auf das Bediensystem ähnlich Fig. 1 mit einem zusätzlichen Projektor neben der Kamera und
- Fig. 8: eine Draufsicht auf eine Integration des erfindungsgemäßen Bediensystems in eine Küche mit unterschiedlichen Anbringungsorten für die Kamera und die Erfassungsfläche.

### Detaillierte Beschreibung der Ausführungsbeispiele

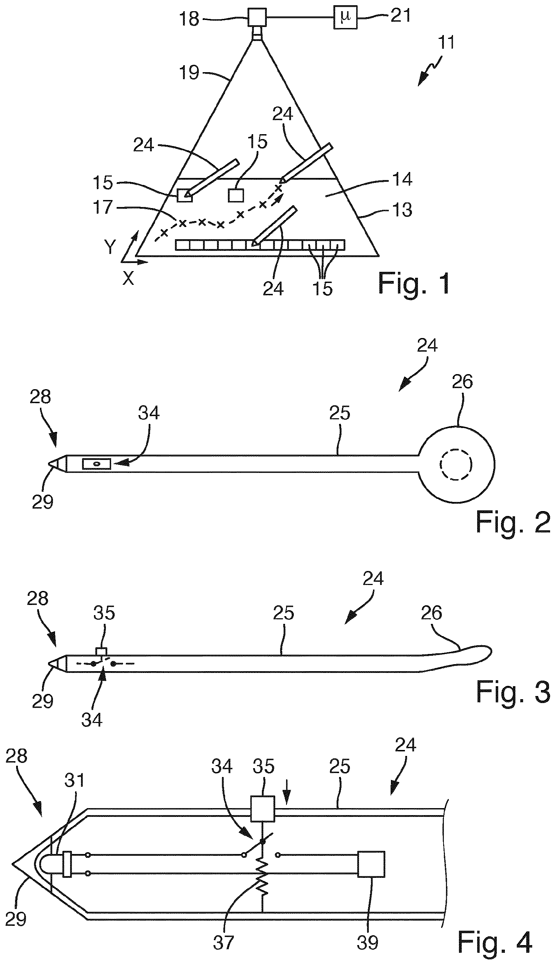

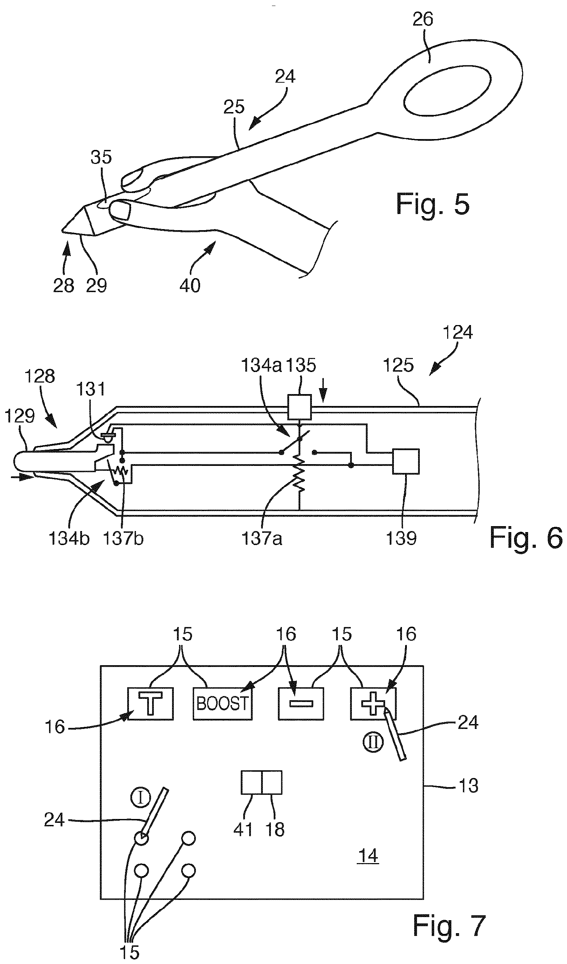

In der Fig. 1 ist ein erfindungsgemäßes Bediensystem 11 in vereinfachter Form dargestellt. Eine vorgenannte Erfassungsfläche 13 ist horizontal ausgerichtet, rechteckig und weist eine Oberseite 14 auf. Wie nachfolgend noch erläutert wird, kann die Erfassungsfläche 13 ein eigenständiges Bauteil sein, beispielsweise eine Matte oder eine dünne Platte. Sie kann bewegbar und somit versetzbar oder wegräumbar ausgebildet sein, alternativ kann sie dauerhaft befestigt sein. Sie kann auch als Aufdruck oder Aufkleber ausgebildet sein. Schließlich kann sie, was nachfolgend noch zu Fig. 7 erläutert wird, durch Projektion auf eine leere Fläche erzeugt werden, somit auch veränderbar sein. Die Oberseite 14 wird dann von der Oberseite der leeren Fläche gebildet, beispielsweise von einer eingangs genannten Arbeitsplatte in einer Küche.

An der Erfassungsfläche 13 bzw. auf ihrer Oberseite 14 sind mehrere Bedienfelder 15 dargestellt. Zwei Bedienfelder 15 links hinten sind rechteckig bzw. nahezu quadratisch und mit Abstand zueinander ausgebildet. Im vorderen Bereich ist nach Streifenart angeordnet eine Vielzahl von rechteckigen Bedienfeldern 15 vorgesehen, die einem Slider entsprechen, wie er beispielsweise bei Kochfeldern zur Leistungseinstellung genutzt wird in Verbindung mit Berührungsschaltern. Dies eignet sich besonders gut für eine Einstellung einer Leistungsstufe.

Die Erfassungsfläche 13 kann zur Erfassung einer Position einer Leuchterscheinung, wie nachfolgend noch erläutert wird, durch eine darüber angeordnete Kamera 18 mit einem Aufnahmebereich 19, der die Erfassungsfläche 13 abdeckt, wie mit einem x-y-Koordinatensystem verstanden werden, wie dies links vorne dargestellt ist. Somit kann eine mit der Kamera 18 verbundene Steuerung 21 jeder Leuchterscheinung die x- und y-Koordinaten ihres Orts zuordnen und dann durch Vergleich mit den abgespeicherten bzw. vorgegebenen Koordinaten der Bedienfelder 15 eine Zuordnung vornehmen. Dort ist dann nämlich räumlich eine Bedienung erfolgt bzw. zuzuordnen. Es kann, wie eingangs erläutert, nicht nur eine punktförmige oder genau definierte Bedienung erfasst werden, sondern auch ein Bewegungszug 17, wie er gestrichelt mit kleinen Kreuzen dargestellt ist. Die kleinen Kreuze sind einzelne Punkte bzw. Koordinaten des Bewegungszugs 17, in der Praxis sind dies natürlich viel mehr. Anhand dieser Kreuze kann die Kamera 18 sozusagen den Bewegungszug 17 erfassen und die Steuerung 21 kann diesen auswerten. So kann eine Bedienung bzw. Eingabe eines Bedienbefehls auch in Form eines solchen Bewegungszugs erfolgen, der ununterbrochen sein kann, möglicherweise aber auch unterbrochen bzw. einfach oder mehrfach abgesetzt sein kann. Damit ist sogar eine zuvor beschriebene Erkennung einer Handschrift oder zumindest einzelner Zahlen und/oder Buchstaben und/oder Symbole möglich, die mit der Eingabevorrichtung 24 sozusagen auf der Oberseite 14 der Erfassungsfläche 13 erzeugt oder geschrieben werden.

Die stiftartige Eingabevorrichtung 24 ist hier an mehreren Stellen dargestellt, obwohl in der Praxis eine einzige als ausreichend und sinnvoll angesehen wird. So soll veranschaulicht werden, wie auf jeweils unterschiedliche Art und Weise damit eine Bedienung erfolgen kann, sowohl an den einzelnen Bedienfeldern 15 links hinten als auch an dem Slider vorne sowie zur Erzeugung eines Bewegungszugs 17.

In den Fig. 2 und 3 ist in Draufsicht und in Seitenansicht die längliche bzw. stiftartige Eingabevorrichtung 24 vergrößert dargestellt. Sie ist nach Art eines Kochlöffels ausgebildet, an einem Stiel 25 ist rechts ein Löffelende 26 für den Gebrauch als Kochlöffel vorgesehen. Die Eingabevorrichtung 24 besteht dann vorteilhaft aus einem für solche Kochlöffel verwendeten Material, insbesondere geeignetem Kunststoff. Im linken Bereich bzw. zum linken freien Ende hin ist eine Spitze 28 vorgesehen, die eine Leuchtspitze 29 trägt. An dieser soll, wie nachfolgend noch dargestellt wird, das Leuchtmittel leuchten bzw. Licht aus der Eingabevorrichtung 24 ausstrahlen, wozu die Leuchtspitze 29 vorteilhaft aus lichtdurchlässigem Material besteht und somit selbst leuchtet. Da sie nichts beleuchten soll oder keinen Leuchtpunkt an anderer Stelle erzeugen soll, braucht sie nicht besonders hell zu leuchten und auch keinen starken Lichtstrahl auszustrahlen. Sie kann dazu vorteilhaft aus opakem bzw. diffusem Lichtleitermaterial bestehen, so dass die Kamera 18 nur sie selbst als Leuchtpunkt oder kleinen leuchtenden Bereich erkennt.

Nahe zu der Spitze 18 ist ein Schalter 34 vorgesehen, der in der Seitenansicht der Fig. 3 gestrichelt und symbolisch dargestellt ist. Er ist mit einem Schaltknopf 35 verbunden, der von der Eingabevorrichtung 24 absteht und manuell betätigt werden kann durch Drücken, wodurch der Schalter 34 geschlossen wird. Er kann entweder so ausgebildet sein, dass er während der Dauer des Drückens geschlossen bleibt, so dass die Bedienperson diese Dauer des geschlossenen Zustands des Schalters 34 selbst bestimmen kann. Alternativ kann bei einem einmaligen Drücken des Schaltknopfs 35 sozusagen ein relativ kurzer Schaltimpuls gegeben werden mit eingangs genannter Dauer, der dann nur eine entsprechend kurze Leuchterscheinung bewirkt. Diese kann dennoch ausreichend sicher von der Kamera 18 erkannt werden.

In der Vergrößerung der Spitze 28 als Schnittdarstellung gemäß der Fig. 4 ist zu erkennen, dass der Stiel 25 hier hohl ausgebildet ist, um die Funktionsteile aufzunehmen. Die Leuchtspitze 29 ist als separates Teil zu erkennen, das an der Spitze 28 des Stiels 25 angebracht ist, vorzugsweise festgeklebt ist. Die Leuchtspitze 29 besteht aus dem vorgenannten opaken Lichtleitermaterial. Eine direkt dahinter angeordnete LED 31 kann also die Leuchtspitze 29 zum Leuchten bringen, was relativ schwach sein kann. Ist die LED 31 vorteilhaft als IR-LED ausgebildet, stört eine Leuchterscheinung an der Leuchtspitze 29 die Bedienperson nicht. Die Kamera 18 ist dann entsprechend für die Erfassung dieses IR-Lichts ausgebildet. Alternativ kann die LED 31 sichtbares Licht ausstrahlen, möglicherweise auch zusammen mit einer weiteren LED beide Lichtarten, die dann die Leuchtspitze 29 sichtbar zum Leuchten bringt. So kann eine optische Rückmeldung für die Bedienperson erzeugt werden, dass die Bedienung auch tatsächlich veranlasst wurde. Die Kamera 18 kann dann die jeweiligen Lichtarten entsprechend gut erfassen.

Vereinfacht dargestellt ist hier auch, wie an dem Schalter 34, der vom Schaltknopf 35 betätigt werden kann, eine Feder 37 angeordnet ist. Diese soll den Schalter 34 wieder öffnen, nachdem der Schaltknopf 35 freigegeben worden ist. Derartige Schalter als integrierte Bauteile, insbesondere auch als Mikroschalter, sind dem Fachmann bekannt. Vorteilhaft können hier Membranschalter oder Schaltfedern verwendet werden, insbesondere auch, um einen vorgenannten kurzen Schaltimpuls zu erzeugen.

Die LED 31 ist mittels des Schalters 34 an einen Akku 39 verbindbar, der die Energie für das Leuchten liefert. Der Akku 39 kann auf leicht vorstellbare Art und Weise wiederaufgeladen werden, alternativ können andere Energiequellen wie Batterien, Kondensatoren odgl. verwendet werden. Es könnte auch eine Kombination eines Schalters 34 mit einem Piezoelement odgl. vorgesehen sein, so dass durch ausreichenden Druck auf den Schaltknopf 35 die Bedienperson selbst die zum Leuchten benötigte Energie erzeugt. Wie zuvor erläutert worden ist und wie die nachfolgend beschriebene Fig. 6 noch zeigt, können an der Eingabevorrichtung 24 auch mehrere dieser Schalter 34 vorgesehen sein für codierte oder anderweitig unterscheidbare unterschiedliche Bedienbefehle, möglicherweise auch mit mehreren LED, von denen jede einem unterschiedlichen Schalter zugeordnet ist.

Die Fig. 5 soll vereinfacht darstellen, wie die Eingabevorrichtung 24 in einer Hand 40 einer Bedienperson gehalten werden kann zur Eingabe eines Befehls am Bediensystem 11 gemäß Fig. 1. Die Hand 40 hält die Eingabevorrichtung 24 nahe der Spitze 28. Ein Finger liegt direkt am oder nahe am Schaltknopf 35, um diesen bei Bedarf betätigen zu können. Die Leuchtspitze 29 steht hervor und kann an, über oder auf eines der Bedienfelder 15 der Erfassungsfläche 13 gehalten werden. Dann kann durch Drücken des Schaltknopfs 35 mit der Hand 40 eine Leuchterscheinung an der Leuchtspitze 29 bewirkt werden, was von der Kamera 18 erkannt werden kann und dann zusammen mit der Steuerung 21 als entsprechender Bedienbefehl ausgewertet wird. Bei einer Benutzung der Eingabevorrichtung 24 als Kochlöffel wird dieser normal gehalten und insbesondere auch außerhalb des Aufnahmebereichs 19 der Kamera 18 benutzt, so dass ein versehentliches Betätigen des Schalters 34 nicht störend wäre. Vorteilhaft ist die gesamte Eingabevorrichtung 24 robust und wasserfest ausgebildet für eine verbesserte Gebrauchstauglichkeit.

In der Fig. 6 ist eine alternative Darstellung ähnlich Fig. 4 der Spitze 128 der Eingabevorrichtung 124 dargestellt. In dem Stiel 125 ist an ähnlicher Stelle ein Schaltknopf 135 mit einem zugehörigen Schalter 134a vorgesehen samt Feder 137a zur Rückstellung. An der Spitze 128 ist nun eine längliche Leuchtspitze 129 aus lichtdurchlässigem Material angeordnet, die längsbewegbar an der Spitze 128 gelagert ist. Sie kann also durch Aufdrücken auf eine Fläche nach innen gedrückt werden und dabei einen zweiten Schalter 134b schließen bzw. betätigen. Dieser weist eine Feder 137b auf, die ähnlich wie beim Schaltknopf den Schalter 134b wieder öffnet und vor allem die Leuchtspitze 129 wieder herausdrückt bzw. wieder nach vorne schiebt. Seitlich neben der Leuchtspitze 129 ist eine LED 131 vorgesehen, die von der Seite in die Leuchtspitze 129 hineinstrahlt, so dass auch der nach außen herausragende Teil der Leuchtspitze 129 durch sie leuchtet.

Die Schalter 134a und 134b sind parallel zueinander geschaltet und mit der LED 131 verbunden, so dass diese leuchtet, wenn nur einer dieser beiden Schalter betätigt wird. Eine Bedienperson hat also die Wahl, den Schaltknopf 135 zu drücken oder die Eingabevorrichtung 124 mit der Leuchtspitze 129 auf die Oberseite 14 der Erfassungsfläche 13 an gewünschter Stelle aufzudrücken. Es ist leicht vorstellbar, wie zuvor beschrieben worden ist, dass auch jeder der beiden Schalter 134a und 134b ein unterschiedliches Leuchten hervorruft, beispielsweise für unterschiedliche Dauer an derselben LED 131. Alternativ kann für jeden der beiden Schalter 134a und 134b eine eigene LED vorgesehen sein, die beispielsweise mit jeweils unterschiedlicher Wellenlänge Licht abstrahlt, was von der Kamera 18 entsprechend erfasst werden kann. Hier kann auch eine vorgenannte Codierung der Schalter 134a und 134b vorgesehen sein durch unterschiedliche Frequenzen einer LED oder eines Signals, alternativ durch unterschiedliche Signalmuster. Beide bzw. sämtliche LED sollten an der Leuchtspitze 129 leuchten, da dann auch für eine intuitive und exakte Bedienung durch die Bedienperson der Ort der Leuchterscheinung genau bestimmbar ist.

In der Draufsicht auf eine Erfassungsfläche 13 gemäß der Fig. 7 ist neben etwas anders ausgebildeter Darstellung der Bedienfelder 15 links neben der Kamera 18 ein Projektor 41 dargestellt. Dieser Projektor 41 projiziert die Erfassungsfläche 13, so wie sie dargestellt ist, nach unten auf eine beliebige leere und für eine Projektion geeignete Fläche. Dies kann für eine Umrandung der Erfassungsfläche 13 gelten sowie vor allem für die Bedienfelder 15. Dabei können diese Bedienfelder 15 mit den jeweils unterschiedlich dargestellten Symbolen projiziert werden, die auch einzelne Buchstaben oder sogar Worte enthalten können. Als mögliche zusammengesetzte Bedienung ist hier dargestellt, wie mittels der Eingabevorrichtung 24 in einem Schritt I für ein Kochfeld eine hintere linke Kochstelle ausgewählt wird. Dazu wird die Spitze der Eingabevorrichtung 24 über dieses linke hinteren Bedienfeld 15 gehalten und durch Betätigen des Schalters ein kurzes Leuchten bewirkt, was die Kamera 18 entsprechend erkennt. In einem Schritt II wird dann an dem Bedienfeld 15 mit dem Plus-Symbol rechts hinten durch entsprechend häufiges Betätigen des Schalters mit entsprechender Leuchterscheinung eine Bedienung bewirkt, die einem mehrfachen oder dauerhaften Antippen oder Bedienen entspricht. So kann an der links hinten ausgewählten Kochstelle beispielsweise eine Leistung erhöht werden. Dies entspricht einer üblichen Bedienung. Weitere Schritte können noch folgen.

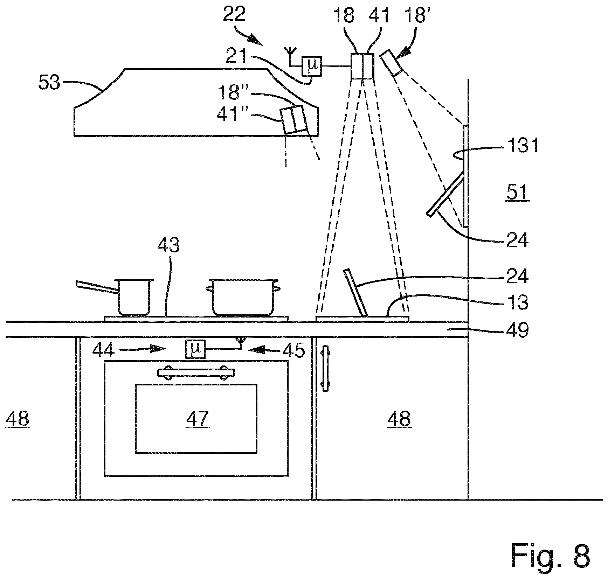

In der Fig. 8 ist eine Küche ausschnittsweise dargestellt mit einer Arbeitsplatte 49, die auf zwei Unterschränken 48 ruht und rechts von einem Hochschrank 51 begrenzt ist. Dies ist ein beispielhafter Aufbau einer Küche. In der Arbeitsplatte 49 ist ein angedeutetes Kochfeld 43 eingelassen, auf dem zwei Kochgefäße stehen. Das Kochfeld 43 weist eine schematisch angedeutete Kochfeldsteuerung 44 auf, die mit einer Funkantenne 45 oder einem entsprechenden Funkmodul verbunden ist. Dies wird nachfolgend noch näher ausgeführt. Unterhalb des Kochfelds 43 ist ein Backofen 47 angeordnet. Er kann mit dem Kochfeld 43 steuerungstechnisch verbunden sein, muss dies aber nicht. Oberhalb des Kochfelds 43 ist an einer hinteren Wand oder auch von der Decke hängend eine Abzugshaube 53 angeordnet.

Rechts neben der Abzugshaube 53 ist eine Kamera 18 zusammen mit einem Projektor 41 angeordnet. Vorteilhaft bilden die beiden eine eingangs genannte Baueinheit, können also gemeinsam montiert und an eine Stromversorgung angeschlossen werden, was einen vereinfachten und präzisen Aufbau ergibt, vor allem im Zusammenspiel. Diese Anordnung entspricht im Wesentlichen wie vorbeschrieben derjenigen der Fig. 7. Die Kamera 18 ist mit einer Steuerung 21 verbunden, vorteilhaft ist diese auch in die genannte Baueinheit integriert. Die Steuerung 21 wiederum weist eine Funkantenne 22 auf, beispielsweise ebenfalls integriert, die mit der Funkantenne 45 der Kochfeldsteuerung 44 zusammenarbeitet. Insbesondere können so Informationen ausgetauscht werden, beispielsweise können Bedienbefehle, die von der Kamera 18 zusammen mit der Steuerung 21 erkannt worden sind, an die Kochfeldsteuerung 44 zur Umsetzung gesandt werden. Der jeweilige Bedienbefehl kann dann beispielsweise eine Kochstelle des Kochfelds 43 auswählen oder diese in ihrer Leistung verändern. Ist der Backofen 47 mit dem Kochfeld 43 steuerungstechnisch verbunden, also auch mit der Kochfeldsteuerung 44, so kann auch er zumindest teilweise gesteuert werden. Alternativ könnte er eine eigene Backofensteuerung samt Funkantenne aufweisen und dann zusätzlich zum Kochfeld 43 mit der Steuerung 21 über deren Funkantenne 22 kommunizieren.

Der Projektor 41 projiziert hier nach unten auf die Oberseite der Arbeitsplatte 49 eine Erfassungsfläche 13. Dies kann auf eine separate Matte oder ein separates Teil erfolgen, welches beispielsweise auf die Arbeitsplatte 49 an dieser Stelle aufgelegt wird, alternativ auch befestigt bzw. aufgeklebt ist. In einer vorteilhaften Ausgestaltung projiziert der Projektor 41 die Erfassungsfläche 13 aber selbst direkt auf die Arbeitsplatte 49, um so die aus den Fig. 1 oder 3 erkennbaren Bedienfelder 15 und Symbole 16 bereitzustellen. Dann sind der konstruktive Aufwand sowie der Betriebsaufwand möglichst gering.

Es ist dargestellt mittels der Eingabevorrichtung 24, wie dann auf der Erfassungsfläche 13 eine zuvor erläuterte Bedienung des Kochfelds 43 und/oder des Backofens 47 erfolgen kann. Durch eine entsprechende Aufteilung von Bedienfeldern oder eine entsprechende Menüführung kann dies auch gleichzeitig für beide Geräte erfolgen.

Ein alternativer Ort für eine Erfassungsfläche 13' ist an der Seitenwand des Hochschranks 51 dargestellt durch die hier eingezeichnete Erfassungsvorrichtung 24. Eine gepunktet dargestellte Kamera 18' kann diese Erfassungsfläche 13' überwachen. Da eine solche Seitenwand eines Hochschranks 51 üblicherweise nicht für bestimmte Tätigkeiten oder als Ablage gebraucht wird, anders als eine Oberseite der Arbeitsplatte 49, kann hier auf einen Projektor verzichtet werden und eine Erfassungsfläche 13 entsprechend Fig. 1 als separates Teil mit fest vorgesehenen Bedienfeldern verwendet werden. Selbstverständlich kann aber auch wieder eine Baueinheit aus Kamera und Projektor verwendet werden wie zuvor erläutert, wobei der Projektor dann eine gewünschte oder passende kontextabhängige Erfassungsfläche durch Projektion erzeugt. Diese wird dann durch die Kamera entsprechend überwacht.

Ein nochmals weiterer Anbringungsort für eine Baueinheit aus Kamera 18" und Projektor 41" ist an der Abzugshaube 53, da sich diese ebenfalls üblicherweise oberhalb einer Arbeitsplatte 49 befindet. So ist eine leichtere Integration möglich, die Baueinheit ist auch nicht so sichtbar wie wenn sie an einer Wand oder einer Decke befestigt wäre. Schließlich ist an der Abzugshaube 53 auch ein Stromanschluss als notwendige Energieversorgung vorgesehen, der auch dies vereinfacht.

## Patentansprüche

1. Bediensystem (11) für ein Elektrohaushaltsgerät (43), aufweisend:
- eine Erfassungsoberfläche und/oder Erfassungsfläche (13), die vorzugsweise horizontal ausgerichtet ist,
- eine Kamera (18), die auf die Erfassungsfläche (13) ausgerichtet ist zu deren Überwachung,
- eine eigenständige und frei bewegbare Eingabevorrichtung (24, 124), die in der Hand (40) gehalten werden kann und frei bewegbar ausgebildet ist,
wobei
- die Eingabevorrichtung (24, 124) ein Leuchtmittel (31, 131) aufweist, dessen Leuchten oder dessen Leuchterscheinung bei einem Austritt aus der Eingabevorrichtung (24, 124) von der Kamera (18) erkennbar ist,
- eine Steuerung (21) vorgesehen ist für die Kamera (18), die dazu ausgebildet ist, eine von der Kamera (18) erkannte Leuchterscheinung des Leuchtmittels (31, 131) zu erkennen und räumlich zuzuordnen,
- die Eingabevorrichtung (24, 124) ein Schaltmittel (34, 134) aufweist, dessen Aktivierung ein Schalten des Leuchtmittels (31, 131) bewirkt,
**dadurch gekennzeichnet, dass** die Eingabevorrichtung (24, 124) ein Kochutensil ist.

2. Bediensystem nach Anspruch 1, **dadurch gekennzeichnet, dass** die Steuerung (21) dazu ausgebildet ist, abhängig vom Erkennen des Schaltens des Leuchtmittels (31, 131) an unterschiedlichen Bereichen an oder oberhalb der Erfassungsfläche (13), vorzugsweise an Bereichen, die in Richtungen parallel zur Erfassungsfläche (13) nebeneinander angeordnet sind, einen Bedienbefehl zuzuordnen, wobei vorzugsweise die Steuerung (21) mehreren dieser Bereiche, insbesondere mindestens der Hälfte der Bereiche, unterschiedliche Bedienbefehle für das Elektrohaushaltsgerät (43) zuordnet.

3. Bediensystem nach Anspruch 1 oder 2, **dadurch gekennzeichnet, dass** an der Erfassungsfläche (13) optische Markierungen (15, 16) vorgesehen sind zur Unterteilung in unterschiedliche Bereiche und/oder auf der Erfassungsfläche (13) mindestens eine Bezeichnung und/oder mindestens ein Symbol (16) pro Bereich vorgesehen ist, wobei vorzugsweise feste und unveränderbare Aufdrucke odgl. auf der Oberseite der Erfassungsfläche (13) vorgesehen sind und/oder das Bediensystem (11) eine Projektionsvorrichtung (41) aufweist, die Bezeichnungen oder Symbole (16) auf die Erfassungsfläche (13) projiziert, insbesondere mit variierender bzw. wechselbarer Bedeutung oder variierenden Bezeichnungen bzw. Symbolen (16).

4. Bediensystem nach einem der vorhergehenden Ansprüche, **dadurch gekennzeichnet, dass** die Eingabevorrichtung (24, 124) mindestens eine Spitze (28, 128) und/oder einen abragenden Vorsprung (29, 129) aufweist, wobei vorzugsweise die Eingabevorrichtung (24, 124) länglich ist bzw. stiftartig oder stabartig ausgebildet ist, insbesondere mit einer Länge von maximal 30 cm und/oder einem Durchmesser von maximal 2 cm.

5. Bediensystem nach Anspruch 4, **dadurch gekennzeichnet, dass** das Leuchtmittel (31, 131) an der mindestens einen Spitze (28, 128) oder dem mindestens einen Vorsprung (29, 129) der Eingabevorrichtung (24, 124) angeordnet ist bzw. dort das Licht aus der Eingabevorrichtung (24, 124) austritt, wobei vorzugsweise die Spitze (28, 128) oder der Vorsprung (29, 129) lichtdurchlässig bzw. lichtleitend sind.

6. Bediensystem nach Anspruch 4 oder 5, **dadurch gekennzeichnet, dass** das Schaltmittel (34, 134) als Druckschalter ausgebildet ist und schaltet, wenn die Eingabevorrichtung (24, 124) mit der Spitze (28, 128) oder dem Vorsprung (29, 129) auf eine Fläche gedrückt wird mit einer Kraft größer als 0,01 N, vorzugsweise größer als 1 N, wobei vorzugsweise das Schaltmittel (34, 134) in der Spitze (28, 128) oder an der Spitze (29, 129) angeordnet ist.

7. Bediensystem nach einem der Ansprüche 1 bis 5, **dadurch gekennzeichnet, dass** das Schaltmittel (34, 134) als manuell zu betätigendes Schaltmittel ausgebildet ist, vorzugsweise als Druckschalter, Schiebeschalter oder Berührungsschalter.

8. Bediensystem nach einem der vorhergehenden Ansprüche, **dadurch gekennzeichnet, dass** eine Küchenarbeitsplatte (49) oder eine Kochfeldplatte eines Kochfelds (43) Teil des Bediensystems sind, und dass die Erfassungsfläche (13) auf der Küchenarbeitsplatte (49) oder auf der Kochfeldplatte vorgesehen ist, insbesondere horizontal ausgerichtet vorgesehen ist, wobei vorzugsweise die Kamera (18) darüber angeordnet ist, insbesondere an einer Abzugsvorrichtung (53) darüber, an einem Oberschrank darüber oder an einer Wand (51) oder an einer Decke darüber.

9. Bediensystem nach einem der vorhergehenden Ansprüche, **dadurch gekennzeichnet, dass** das Kochutensil (24, 124) ausgewählt ist aus der Gruppe Kochlöffel, Rührlöffel, Bratgabel, Schneebesen, Rührbesen, Schöpfkelle, Pfannenwender.

10. Bediensystem nach einem der vorhergehenden Ansprüche, **dadurch gekennzeichnet, dass** die Eingabevorrichtung (24, 124) mindestens zwei Schaltmittel (34, 134) aufweist, wobei mindestens ein Schaltmittel (34, 134) manuell betätigbar ausgebildet ist, wobei vorzugsweise mindestens ein Schaltmittel (34, 134) gemäß Anspruch 6 angeordnet und ausgebildet ist.

11. Bediensystem nach einem der vorhergehenden Ansprüche, **dadurch gekennzeichnet, dass** die Steuerung (12) mitsamt der Kamera (18) dazu ausgebildet sind, ein geschaltetes Leuchtmittel (31, 131) an unterschiedlichen Stellen als Bewegungszug (17) zu erkennen und daraus einen bestimmten Bedienbefehl abzuleiten, wobei vorzugsweise eine Handschrift-Bewegung der Eingabevorrichtung (24, 124) bzw. des Leuchtmittels (31, 131) durch die Kamera (18) und die Steuerung (21) erkennbar ist.

12. Bedienverfahren zur Bedienung eines Elektrohaushaltsgeräts (43) mit einem Bediensystem (11) nach einem der vorhergehenden Ansprüche, **gekennzeichnet durch** die Schritte:
- die Eingabevorrichtung (24, 124) des Bediensystems (11) wird in die Hand (40) genommen,
- eine Spitze (28, 128) oder ein Vorsprung (29, 129) der Eingabevorrichtung (24, 124) wird auf, an oder nahe über einem von mehreren Bereichen der Erfassungsfläche (13) positioniert, die einem gewünschten Bedienbefehl entsprechen,
- das Leuchtmittel (31, 131) der Eingabevorrichtung (24, 124) wird durch das Schaltmittel (34, 134) aktiviert, vorzugsweise selbststätig beim Aufdrücken der Eingabevorrichtung (24, 124) mit der Spitze (28, 128) oder dem Vorsprung (29, 129) auf die Erfassungsfläche (13),
- das aktivierte Leuchtmittel (31, 131) der Eingabevorrichtung (24, 124) wird von der Kamera (18) erkannt und mittels der Steuerung (21) dem bestimmten Bereich der Erfassungsfläche (13) zugeordnet,
- die Steuerung (21) erkennt den diesem Bereich der Erfassungsfläche (13) zugeordneten Bedienbefehl für das Elektrohaushaltsgerät (43) aus einer Reihe von abgespeicherten Bedienbefehlen,
- die Steuerung (21) gibt den Bedienbefehl an das Elektrohaushaltsgerät (43) bzw. an eine Steuerung (44) des Elektrohaushaltsgeräts (43) weiter zu dessen Durchführung.

13. Bedienverfahren nach Anspruch 12, **dadurch gekennzeichnet, dass** entweder das Schaltmittel (34, 134) selbsttätig aktiviert wird bei Aufsetzen der Eingabevorrichtung (24, 124) mit einer Spitze (28, 128) und/oder einem Vorsprung (29 129) auf die Erfassungsfläche (13) oder das Schaltmittel (34, 134) manuell von der Bedienperson aktiviert wird bzw. betätigt wird.

14. Bedienverfahren nach Anspruch 12 oder 13, **dadurch gekennzeichnet, dass** ein geschaltetes Leuchtmittel (31, 131) an unterschiedlichen Stellen als Bewegungszug (17) erkannt wird und daraus ein bestimmter Bedienbefehl abgeleitet wird, wobei vorzugsweise eine Handschrift-Bewegung der Eingabevorrichtung (24, 124) bzw. des Leuchtmittels (31, 131) durch die Kamera (18) und die Steuerung (21) erkannt wird.

15. Bedienverfahren nach einem der Ansprüche 12 bis 14, **dadurch gekennzeichnet, dass** handschriftliche Notizen, Skizzen odgl. erkannt und abgespeichert werden, vorzugsweise in einem Rezeptbuch oder als Notiz bzw. als Einkaufszettel.

## Claims

1. Control system (11) for a domestic electrical appliance (43), comprising:
- a detection surface and/or detection area (13), which is preferably horizontally oriented,
- a camera (18), which is oriented towards the detection area (13) in order to monitor it,
- a separate, freely movable input device (24, 124), which can be held in the hand (40) and is designed to be freely movable,
wherein
- the input device (24, 124) comprises a lighting means (31, 131), of which the luminescence or lighting effect is detectable by the camera (18) when it emerges from the input device (24, 124),
- a controller (21) is provided for the camera (18) and is designed to recognize and spatially associate a lighting effect of the lighting means (31, 131) detected by the camera (18),
- the input device (24, 124) comprises a switch means (34, 134), the activation of which causes the lighting means (31, 131) to be switched,
**characterized in that** the input device (24, 124) is a cooking utensil.

2. Control system according to claim 1, **characterized in that** the controller (21) is designed to associate an operating command on the basis of it having been detected that the lighting means (31, 131) has been switched in different regions on or above the detection area (13), preferably in regions that are arranged beside one another in directions parallel to the detection area (13), the controller (21) preferably associating different operating commands for the domestic electrical appliance (43) with a plurality of these regions, in particular at least half of the regions.

3. Control system according to claim 1 or 2, **characterized in that** visual markers (15, 16) are provided on the detection area (13) to divide it into different regions and/or at least one identifier and/or at least one symbol (16) is provided on the detection area (13) per region, wherein fixed and unalterable printed information or the like is preferably provided on the upper face of the detection area (13) and/or the control system (11) comprising a projection device (41), which projects identifiers or symbols (16) onto the detection area (13), in particular with a varying or changeable meaning or varying identifiers or symbols (16).

4. Control system according to any of the preceding claims, **characterized in that** the input device (24, 124) comprises at least one tip (28, 128) and/or one protruding projection (29, 129), wherein the input device (24, 124) is preferably elongate, or pen-like or rod-like, in particular having a length of at most 30 cm and/or a diameter of at most 2 cm.

5. Control system according to claim 4, **characterized in that** the lighting means (31, 131) is arranged on the at least one tip (28, 128) or the at least one projection (29, 129) of the input device (24, 124) or the light emerges from the input device (24, 124) at this point, wherein the tip (28, 128) or the projection (29, 129) is preferably translucent or light-conducting.

6. Control system according to claim 4 or 5, **characterized in that** the switch means (34, 134) is designed as a pressure-operated switch and switches when the input device (24, 124) is pressed onto an area by the tip (28, 128) or the projection (29, 129) with a force of greater than 0.01 N, preferably greater than 1 N, wherein the switch means (34, 134) is preferably arranged in the tip (28, 128) or on the tip (29, 129).

7. Control system according to any of claims 1 to 5, **characterized in that** the switch means (34, 134) is designed as a switch means to be actuated manually, preferably as a pressure-operated switch, slide switch or touch switch.

8. Control system according to any of the preceding claims, **characterized in that** a kitchen worktop (49) or a hob top of a hob (43) is part of the control system, and **in that** the detection area (13) is provided on the kitchen worktop (49) or on the hob top, in particular is provided to be horizontally oriented, wherein the camera (18) is preferably arranged thereabove, in particular on an extractor device (53) thereabove, on a wall cabinet thereabove or on a wall (51) or on a ceiling thereabove.

9. Control system according to any of the preceding claims, **characterized in that** the cooking utensil (24, 124) is selected from the group of cooking spoons, wooden spoons, toasting forks, whisks, beaters, ladles or spatulas.

10. Control system according to any of the preceding claims, **characterized in that** the input device (24, 124) comprises at least two switch means (34, 134), wherein at least one switch means (34, 134) is designed to be manually actuatable, and wherein at least one switch means (34, 134) is preferably arranged and designed according to claim 6.

11. Control system according to any of the preceding claims, **characterized in that** the controller (12) together with the camera (18) are designed to recognize a switched lighting means (31, 131) as a motion sequence (17) at different points and to derive a particular operating command therefrom, wherein a handwriting motion of the input device (24, 124) or the lighting means (31, 131) is preferably detectable by the camera (18) and the controller (21).

12. Control method for operating a domestic electrical appliance (43) having an control system (11) according to any of the preceding claims, **characterized by** the following steps:
- the input device (24, 124) of the control system (11) is picked up by the hand (40),
- a tip (28, 128) or a projection (29, 129) of the input device (24, 124) is positioned at, on or closely above one of a plurality of regions of the detection area (13) which correspond to a desired operating command,
- the lighting means (31, 131) of the input device (24, 124) is activated by the switch means (34, 134), preferably automatically when the input device (24, 124) is pressed onto the detection area (13) by the tip (28, 128) or the projection (29, 129),
- the activated lighting means (31, 131) of the input device (24, 124) is detected by the camera (18) and is associated with the particular region of the detection area (13) by means of the controller (21),
- the controller (21) recognizes the operating command associated with this region of the detection area (13) for the domestic electrical appliance (43) from a number of stored operating commands,
- the controller (21) relays the operating command to the domestic electrical appliance (43) or to a controller (44) of the domestic electrical appliance (43) in order for it to be carried out.

13. Control method according to claim 12, **characterized in that** either the switch means (34, 134) is activated automatically when the input device (24, 124) is placed onto the detection area (13) by a tip (28, 128) and/or a projection (29, 129), or the switch means (34, 134) is activated or actuated manually by the operator.

14. Control method according to claim 12 or 13, **characterized in that** a switched lighting means (31, 131) is recognized as a motion sequence (17) at different points and a particular operating command is derived therefrom, wherein a handwriting motion of the input device (24, 124) or the lighting means (31, 131) is preferably detected by the camera (18) and recognized by the controller (21).

15. Control method according to any of claims 12 to 14, **characterized in that** handwritten notes, sketches or the like are recognized and stored, preferably in a recipe book or as a note or shopping list.

## Revendications

1. Système de commande (11) pour un appareil électroménager (43) présentant :
- une surface de détection et/ou une zone de détection (13) orientée de préférence horizontalement,
- une caméra (18) orientée vers la surface de détection (13) pour la surveiller,
- un dispositif d'entrée (24, 124) autonome et librement mobile pouvant être tenu dans la main (40) et conçu pour se déplacer librement,
sachant
- que le dispositif d'entrée (24, 124) présente un moyen d'éclairage (31, 131) dont la lumière ou l'apparition lumineuse est détectable par la caméra (18) à la sortie du dispositif d'entrée (24, 124),
- qu'une commande (21) est prévue pour la caméra (18), laquelle est conçue pour distinguer une apparition lumineuse du moyen d'éclairage (31, 131) détectée par la caméra (18) et l'affecter dans l'espace,
- que le dispositif d'entrée (24, 124) présente un moyen de commutation (34, 134) dont l'activation génère une commutation du moyen d'éclairage (31, 131),
**caractérisé en ce que** le dispositif d'entrée (24, 124) est un ustensile de cuisine.

2. Système de commande selon la revendication 1, **caractérisé en ce que** la commande (21) est conçue pour affecter un ordre de commande en fonction de la détection de la commutation du moyen d'éclairage (31, 131) sur différentes zones sur ou au-dessus de la surface de détection (13), de préférence sur des zones qui sont disposées les unes à côté des autres dans des directions parallèles à la surface de détection (13), sachant que la commande (21) affecte de préférence à plusieurs de ces zones, notamment à au moins la moitié desdites zones, différents ordres de commande pour l'appareil électroménager (43).

3. Système de commande selon la revendication 1 ou 2, **caractérisé en ce que** des marquages optiques (15, 16) sont prévus sur la surface de détection (13) pour une répartition en différentes zones et/ou qu'il est prévu sur la surface de détection (13) au moins une identification et/ou au moins un symbole (16) par zone, sachant que de préférence des impressions fixes et inaltérables ou similaires sont prévues sur la partie supérieure de la surface de détection (13) et/ou que le système de commande (11) présente un dispositif de projection (41) projetant les identifications ou les symboles (16) sur la surface de détection (13), en particulier avec une signification variable ou changeante ou des désignations ou symboles (16) variables.

4. Système de commande selon l'une des revendications précédentes, **caractérisé en ce que** le dispositif d'entrée (24, 124) présente au moins une pointe (28, 128) et/ou un épaulement en saillie (29, 129), sachant que le dispositif d'entrée (24, 124) est de préférence oblong ou conçu en forme de crayon ou de barre, en particulier avec une longueur maximale de 30 cm et/ou un diamètre maximal de 2 cm.

5. Système de commande selon la revendication 4, **caractérisé en ce que** le moyen d'éclairage (31, 131) est disposé sur au moins une pointe (28, 128) ou au moins un épaulement (29, 129) du dispositif d'entrée (24, 124) ou que la lumière sort du dispositif d'entrée (24, 124) à cet endroit, sachant que la pointe (28, 128) ou l'épaulement (29, 129) sont de préférence translucides ou conducteurs de lumière.

6. Système de commande selon la revendication 4 ou 5, **caractérisé en ce que** le moyen de commutation (34, 134) est conçu sous la forme d'un interrupteur à pression et commute lorsque le dispositif d'entrée (24, 124) est appuyé sur une surface avec la pointe (28, 128) ou l'épaulement (29, 129) avec une force supérieure à 0,01 N, de préférence supérieure à 1 N, sachant que le moyen de commutation (34, 134) est de préférence disposé dans la pointe (28, 128) ou sur la pointe (29, 129).

7. Système de commande selon l'une des revendications 1 à 5, **caractérisé en ce que** le moyen de commutation (34, 134) est conçu sous la forme d'un moyen de commutation à actionner manuellement, de préférence sous la forme d'un interrupteur à pression, d'un interrupteur à coulisse ou d'un interrupteur à contact.

8. Système de commande selon l'une des revendications précédentes, **caractérisé en ce qu'**un plan de travail de cuisine (49) ou une plaque d'une table de cuisson (43) font partie du système de commande, et que la surface de détection (13) est prévue sur le plan de travail de cuisine (49) ou sur la plaque de cuisson, en particulier avec une orientation à l'horizontale, sachant que la caméra (18) est disposée de préférence au-dessus, en particulier au-dessus sur un dispositif d'extraction (53), au-dessus sur un élément haut ou au-dessus sur un mur (51) ou un plafond.

9. Système de commande selon l'une des revendications précédentes, **caractérisé en ce que** l'ustensile de cuisine (24, 124) est sélectionné parmi le groupe cuillère en bois, cuillère de cuisine, fourchette à viande, fouet, fouet à émulsionner, louche, spatule.

10. Système de commande selon l'une des revendications précédentes, **caractérisé en ce que** le dispositif d'entrée (24, 124) présente au moins deux moyens de commutation (34, 134), sachant qu'au moins un moyen de commutation (34, 134) est conçu pour être actionné manuellement, sachant que de préférence au moins un moyen de commutation (34, 134) est disposé et conçu conformément à la revendication.

11. Système de commande selon l'une des revendications précédentes, **caractérisé en ce que** la commande (12) ainsi que la caméra (18) sont conçues pour détecter un moyen d'éclairage (31, 131) commuté sous forme de tracé de déplacement (17) à différents endroits et pour en déduire un ordre de commande déterminé, sachant que de préférence un mouvement d'écriture du dispositif d'entrée (24, 124) ou du moyen d'éclairage (31, 131) est détectable par la caméra (18) et la commande (21).

12. Procédé de commande d'un appareil électroménager (43) à l'aide d'un système de commande (11) selon l'une des revendications précédentes, **caractérisé par** les étapes suivantes :
- le dispositif d'entrée (24, 124) du système de commande (11) est pris dans la main,
- une pointe (28, 128) ou un épaulement (29, 129) du dispositif d'entrée (24, 124) est positionné(e) sur, au niveau de ou à proximité de l'une des multiples zones de la surface de détection (13), lesquelles correspondent à un ordre de commande souhaité,
- le moyen d'éclairage (31, 131) du dispositif d'entrée (24, 124) est activé par le moyen de commutation (34, 134), de préférence automatiquement en appuyant le dispositif d'entrée (24, 124) avec la pointe (28, 128) ou l'épaulement (29, 129) sur la surface de détection (13),
- le moyen d'éclairage (31, 131) activé du dispositif d'entrée (24, 124) est détecté par la caméra (18) et affecté à l'aide de la commande (21) à la zone déterminée de la surface de détection (13),
- la commande (21) distingue l'ordre de commande de l'appareil électroménager (43) affecté à cette zone de surface de détection (13) parmi un nombre d'ordres de commande mémorisés,
- la commande (21) transmet l'ordre de commande à l'appareil électroménager (43) ou à une commande (44) de l'appareil électroménager (43) pour son exécution.

13. Procédé de commande selon la revendication 12, **caractérisé en ce que** soit le moyen de commutation (34, 134) est activé automatiquement lors de la pause du dispositif d'entrée (24, 124) avec une pointe (28, 128) et/ou un épaulement (29 129) sur la surface de détection (13), soit le moyen de commutation (34, 134) est activé ou actionné manuellement par l'opérateur.

14. Procédé de commande selon la revendication 12 ou 13, **caractérisé en ce qu'**un moyen d'éclairage (31, 131) commuté est détecté à différents endroits en tant que tracé de déplacement (17) et qu'un ordre de commande déterminé en est déduit, sachant que de préférence un mouvement d'écriture du dispositif d'entrée (24, 124) ou du moyen d'éclairage (31, 131) est détecté par la caméra (18) et la commande (21).

15. Procédé de commande selon l'une des revendications 12 à 14, **caractérisé en ce que** des notes manuscrites, des croquis ou similaires sont reconnus et enregistrés, de préférence dans un livre de recettes ou sous forme de note ou de liste d'achats.
